# EUROPEAN PATENT APPLICATION

(11) **EP 2 665 279 A1**
(43) Date of publication of application: **20.11.2013**
(21) Application number: 12734712.8
(22) Date of filing: 05.01.2012
(51) Int. Cl.: H04N 13/00, G02B 27/26

(54) **POLARIZING STEREO ELECTRONIC LARGE SCREEN DISPLAY SYSTEM AND MANUFACTURING METHOD THEREOF**

(30) Priority: 14.01.2011 CN 201110007877; 14.01.2011 CN 201120011206 U
(71) Applicant: Li, Chao, Henan 450001 (CN)
(72) Inventor: SHI, Daxin, Zhengzhou Henan 450001 (CN); KANG, Xianbin, Zhengzhou Henan 450001 (CN); XIONG, Bin, Zhengzhou Henan 450001 (CN); LI, Shuzheng, Zhengzhou Henan 450001 (CN)
(74) Representative: Schultheiss, Jürgen
(86) International application number: PCT/CN2012/070050
(87) International publication number: WO 2012/094961

(57) **Abstract**

Disclosed is a manufacturing method for a polarizing stereo electronic large screen display system, which comprises the following steps: step one, arranging multiple display units or display pixels on the display screen, using a controller to control the display units or display pixels to emit light; step two, arranging two independent pixels on the position of every display pixel, one of the two independent pixels emitting light for a left eye image, and the other emitting light for a right eye image; step three, arranging polarizing film on every said display unit or display pixel. In the present invention, two independent pixels are arranged on the position of each physical pixel, thus there is no reduction in system resolution. The stereo display is completely compatible with a flat display, is easy to operate and has high definition.

## Description

### Field of the invention

The present invention is directed to a large scale 3D electronic display system, i.e. a large scale polarizing 3D electronic display system and the manufacturing approach.

### Background of the invention

Generally, the existing techniques use a pair of shutter mode glasses, with a shortage of rapid image-switching between the left eye and the right eye, causing serious visual flickering ---easy to generate visual fatigue, and 3D/2D display is not fully compatible. All the current large-scale polarizing stereoscopic display screens are arranged in alternate lines, in alternate rows or odd/even parity arrays, with a shortage of only one real pixel at position of each physical pixel, either the left eye image or the right eye image will emit light, with decreased resolution. The goal of the present invention is to provide a Double-Channel HD stereoscopic display screen without loss of resolution, suitable for both indoor and outdoor application.

### Contents of the invention

The goal of the present invention is to provide a large scale polarizing 3D electronic display system and the manufacturing approach, which has overcome shortages of existing technology. Set two individual pixels each physical pixel area. Therefore, it has no loss of resolution, and 3D/2D displays are fully compatible, easy to operate with double-channel high definition.

For the above-mentioned purposes, the present invention adopts the following solution:
Manufacturing approach of a large scale polarizing 3D electronic display system includes the following steps:
   Step 1. Set several display elements or display pixels on the display screen. A controller will control the display elements or the display pixels to emit light;
   Step 2. Set two individual pixels at each display pixel: one is lighting for the left eye image, the other is lighting for the right eye image;
   Step 3. Set the polarizing film at the mentioned each display element or display pixel, respectively.

More, the mentioned polarizing film may be set on the mentioned display element or display pixel individually, line by line or column by column.

More, the mentioned polarizing film is used as block or plate for covering or shielding some pixels.

More, the light polarizing with the mentioned polarizing film uses linear polarization, the polarizing angle between the left eye and the right eye is 90°, errors should be less than ±10%.

More, the light polarizing by the mentioned polarizing film uses circular polarization, the polarizing angles are in parallel, phases are orthogonal, or the polarizing angles are orthogonal, phases are in parallel, errors should be less than ±10%.

A large scale polarizing 3D electronic display system includes the controller and the display screen. The controller connects with the display screen. Set many display elements or display pixels on the display screen, in which surface of the mentioned display elements or display pixels are set with polarizing film. There is one or two individual pixels in one physical pixel area.

More, one of the mentioned two individual pixels is lighting for the left eye image, the other is lighting for the right eye image.

More, the mentioned polarizing film is set on the mentioned display elements or display pixels individually, line by line or column by column. More, the mentioned polarizing film is block or plate polarizing film for covering or shielding some pixels.

More, the display elements or display pixels of the mentioned display screen include the pixels for the left eye and the pixels for the right eye. The pixels for the left and the right eyes are arranged line by line, column by column, in odd parity array or even parity array.

### Effect of the invention:

The present invention can be used for large electronic display adopted a polarization system for indoor and outdoor application, without any limit on pixel size. It can also be used for all kinds of smaller screens. The present invention doesn't use electronic shutter glasses, which may cause visual fatigue, anymore. The stereoscopic display is completely compatible with normal 2D display, thus effect of stereoscopic display is improved, and comfortableness of eyes is greatly enhanced.

To some extent, other advantages, objectives and characteristics of the present invention will be described in the succedent explanation. And to some extent, based on research in the context, these advantages are obvious for the technicians in this field, or guidance learned from practice of the present invention. The goal and other advantages of the present invention may be realized or obtained from the description or structure in the drawings as follows.

### Description of the drawings

FIGURE 1 is the block diagram of a large scale polarizing 3D electronic display system of the present invention;
FIGURE 2 is the present invention separated up and down (two individual pixels in one physical pixel);
FIGURE 3 is a physical pixel of the present invention formed by each pair of individual pixels (separated left and right) ;
FIGURE 4 is a physical pixel of the present invention formed by each pair of individual pixels (separated left upward);
FIGURE 5 is a physical pixel of the present invention formed by each pair of individual pixels (separated right downward);
FIGURE 6 is the sketch map of the irradiative pixels of the left and the right eye arranged in alternate lines;
FIGURE 7 is the sketch map of the irradiative pixels of the left and the right eye arranged in alternate columns;
FIGURE 8 is the sketch map of the irradiative pixels of the left and the right eye arranged with odd parity array;
FIGURE 9 is the sketch map of the irradiative pixels of the left and the right eye arranged with even parity array.

### Implement of the invention

Next, we will give detailed description of the present invention with material implement way combined with the drawings:

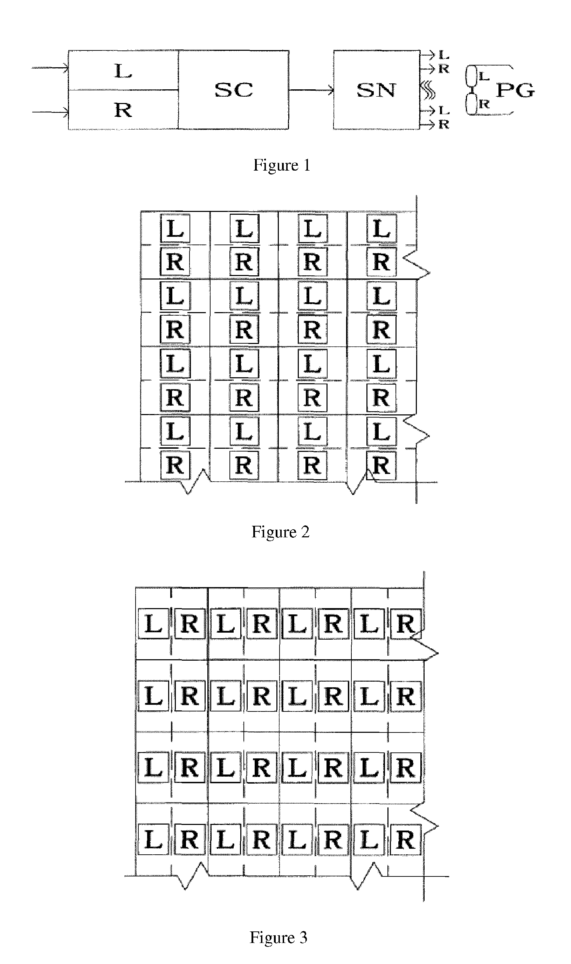

As shown in FIGURE 1, the present invention includes a SC electronic controller and a display screen SN. The SC electronic controller may be a scrambler, mixer or complex; the display screen SN has many display elements or display pixels. The SC electronic controller connects with the display screen SN. The SC electronic controller controls transmission and image processing. Send the image information data of the left & right eye to the display screen SN with the SC electronic controller. Then, separate the left eye image and the right eye image with a polarization system. Cover the display elements or display pixels of the display screen with polarizing film or the polarization board L or R at orthogonal angles or phases. At the SC electronic controller end, send the image information data of the left & right eye to L or R polarizing film or to the irradiative pixels shielded with the polarizing film or plate respectively, to form the left and the right eye image. When viewing, one can wear a pair of polarizing glasses with polarizing film or polarizing plate at orthogonal angles or phases to separate the left and the right eye images and enter the left eye and the right eye respectively, to form a stereoscopic image in ones brain.

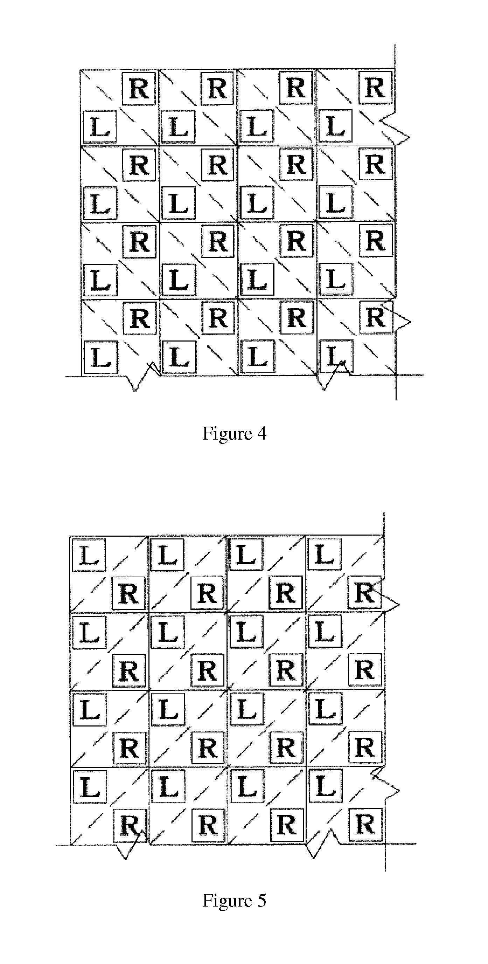

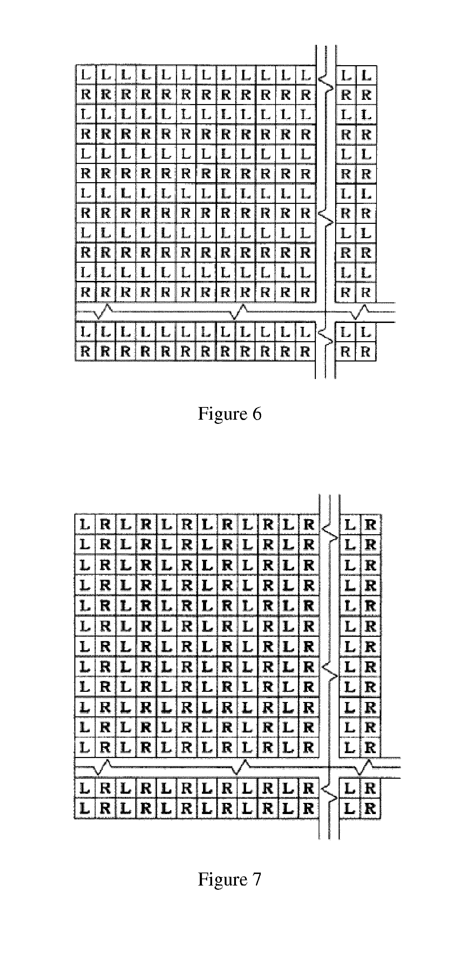

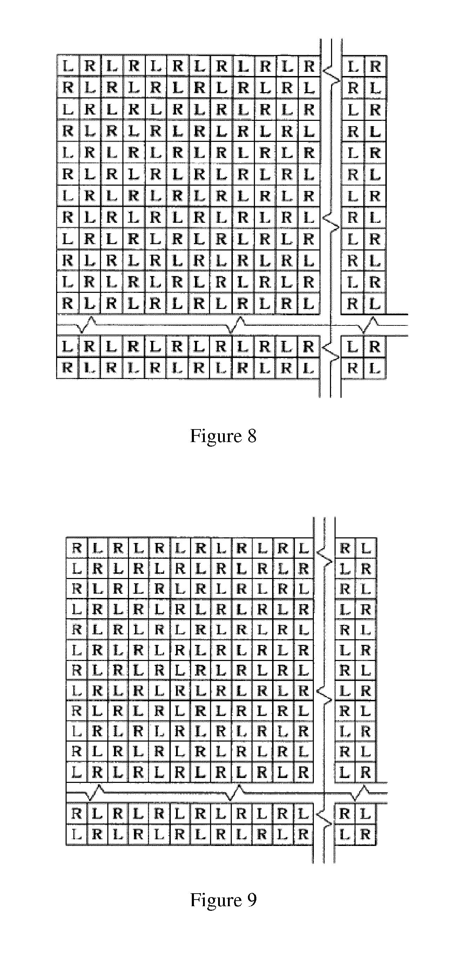

The display pixel of the present invention refers to physical pixel, each display pixel includes one or two individual pixels, i.e. inserting two individual pixels at the position of each display pixel. In this way, stereoscopic display is realized, when each physical pixel can be divided into two completely individual pixels, resolution of the left eye and the right eye image may have no loss. The individual pixels in the present invention means that each pixel is 3-in-1, and can form full colour. These two individual pixels include irradiance of the left eye image, and irradiance of the right eye image. The left eye and the right eye display pixel can be arranged up and down, as shown in FIGURE 2; or arranged left and right, as shown in FIGURE 3; or arranged separately left upward, as shown in FIGURE 4; or arranged separately right upward, as shown in FIGURE 5. As shown in FIGURE 6, FIGURE 7, FIGURE 8 and FIGURE 9, the display pixels or the display elements of the display screen can be divided into two sets: the irradiative pixels of the left eye and the irradiative pixels of the right eye, the irradiative pixels of the left and the right eye can be arranged line by line, column by column, in a parity array or even parity array.

The light polarizing by polarizing film may use linear polarization or circular polarization. In linear polarization mode, the polarizing angle between the left eye and the right eye is 90°, errors should be less than ±10%. In circular polarization mode, the two polarizing angles are in parallel, the two phases are orthogonal, or the polarizing angles are orthogonal, phases are in parallel, errors should be less than ±10%. For the pixel, the polarizing film may be separated, i.e. the polarizing film is set on a single irradiative pixel; or in a line, arow, i.e. shape the polarizing film into strip or belt, set on display element or display pixel in a line or arow; or make the film into block or plate covering or shielding some pixels. Hold the direction of polarizing light of the display screen SN consistent with the direction of polarizing light of the polarizing glasses PG.

Manufacturing approach of the invention:
Step 1, Several display elements or display pixels are set on the display screen SN. The display screen SN connects with the SC electronic controller. The SC electronic controller controls the display element or display pixel to shine;
Step 2, Two individual pixels are inserted at each display pixel, in which one of the two individual pixels is irradiance of the left eye image, and the other is irradiance of the right eye image;
Step 3, The polarizing film will be set on each display pixel. The polarizing film can be sticked or covered on each display pixel, fixed on each display element or display pixel other way. The screen surface can be waterproof processed for outdoor application.

The above examples are used only for explaining the optimized implement approaches to the present invention. However, the present invention is not limited to the above mentioned implement approaches. Within knowledge field of ordinary technicians in the mentioned field, any modification within the principle of the present invention equals to substitute and improvement. Therefore, it should be under the protection of the request of the present invention.

## Claims

1. A manufacturing approach of a large scale polarizing 3D electronic display system includes the following steps:Step1. Set a lot of display elements or display pixels on the display screen; the display elements or display pixels are controlled with a display controller;Step 2. Set two individual pixels (one is lighting for the left eye image, the other is lighting for the right eye image) at each physical display pixel area.Step 3. Set polarizing film at each display element or display pixel respectively.

2. A manufacturing approach of the mentioned large scale polarizing 3D electronic display system of claim 1,with characteristics as follows: the mentioned polarizing film can be set onto the display elements or display pixels individually, line by line or column by column.

3. A manufacturing approach of the mentioned large scale polarizing 3D electronic display system of claim 1, with characteristics as follows: the mentioned polarizing film can be as block or plate polarizing film for covering or shielding some pixels.

4. A manufacturing approach of the mentioned large scale polarizing 3D electronic display system of claim 1, claim 2 or claim 3, with characteristics as follows: the light polarizing with the mentioned polarizing film uses linear polarization, the angle difference between left polarizing and right polarizing is 90°, errors should be less than ±10%.

5. A manufacturing approach of the mentioned large scale polarizing 3D electronic display system of claim 1, claim 2 or claim 3,with characteristics as follows: the light polarizing with the mentioned polarizing film uses circular polarization, the two polarizing angles are in parallel, the two phases are orthogonal, or the polarizing angles are orthogonal, phases are in parallel, errors should be less than ±10%.

6. A large scale polarizing 3D electronic display system consists of a controller and a display screen. The controller is connected with the display screen. Set a lot of display elements or display pixels on the display screen, with characteristics as follows: set the polarizing film on surface of the mentioned display elements or display pixels, each display pixel includes one or two individual pixels.

7. A manufacturing approach of the mentioned large scale polarizing 3D electronic display system of claim 6, with characteristics of two individual pixels: one is lighting for the left eye image, the other is lighting for the right eye image.

8. A manufacturing approach of the mentioned large scale polarizing 3D electronic display system of claim 7, with characteristics as follows: the mentioned polarizing film is set on the display elements or display pixels individually, line by line or column by column.

9. A manufacturing approach of the mentioned large scale polarizing 3D electronic display system of claim 7, with characteristics as follows: the mentioned polarizing film is used as block or plate polarizing film for covering or shielding some pixels.

10. A manufacturing approach of the mentioned large scale polarizing 3D electronic display system of claim 6-9(any item), with polarizing film has the following characteristics: the display elements or display pixels, of the mentioned display screen, are divided into two sets: pixels for the left eye and the pixels forthe right eye. The pixels of the left and the right eye are arranged individually, line by line, column by column, parity array or even parity array.
